# EUROPÄISCHE PATENTSCHRIFT

(11) **EP 3 763 976 B1**
(45) Veröffentlichungstag und Bekanntmachung des Hinweises auf die Patenterteilung: **29.05.2024**
(21) Anmeldenummer: 20184975.9
(22) Anmeldetag: 09.07.2020
(51) Int. Cl.: F16K 7/12, F16K 37/00

(54) **BAUTEIL MIT EINEM ELEKTRONISCHEN INFORMATIONSTRÄGER**
COMPONENT WITH AN ELECTRONIC INFORMATION CARRIER
COMPOSANT DOTÉ D'UN SUPPORT D'INFORMATIONS ÉLECTRONIQUE

(30) Priorität: 09.07.2019 DE 102019004723
(43) Veröffentlichungstag der Anmeldung: 13.01.2021
(73) Patentinhaber: SISTO Armaturen S.A., 6468 Echternach (LU)
(72) Erfinder: Hackenberger, Bernd, 6468 Echternach (LU)
(74) Vertreter: Behr, Wolfgang

(56) Entgegenhaltungen:
- DE-A1-102017 128 229
- DE-U1-202018 105 500
- DE-U1-202018 105 892
- US-B2- 7 256 699

## Beschreibung

Die Erfindung betrifft ein Bauteil in Form einer Membran für ein Membranventil und/oder eine Membranpumpe, mit einem elektronischen Informationsträger.

Zur Zuordnung von Informationen zu einem Bauteil und/oder zum Auslesen von Sensordaten aus einem Bauteil werden zunehmend elektronische Informationsträger eingesetzt, welche mit dem Bauteil verbunden werden. Insbesondere werden als elektronische Informationsträger RFID-Chips eingesetzt.

Im Stand der Technik werden solche elektronischen Informationsträger üblicherweise im Rahmen der Herstellung in das entsprechende Bauteil eingebracht, beispielsweise in eine Spritzgussform zur Herstellung des Bauteils eingebracht und dort umspritzt, oder bei einem mehrlagigen Bauteil zwischen den Lagen des Bauteils angeordnet.

Beispielsweise ist aus der Druckschrift DE 10 2016 106 818 B3 eine mehrlagige Membran bekannt, wobei in einer mittleren Lage eine Aussparung vorgesehen ist, in welche der Informationsträger eingebracht wird, und mit den Deckschichten bedeckt wird.

Die Herstellung solcher Bauteile ist aufwendig. Weiterhin weisen solche Bauteile im Hinblick auf das Recycling schlechte Eigenschaften auf.

Eine Membran gemäß dem Oberbegriff von Anspruch 1 ist aus der Druckschrift DE 20 2018 105 892 U1 bekannt.

Weitere Bauteile mit daran angeordneten Informationsträgern sind aus den Druckschriften DE 10 2017 128 229 A1, DE 20 2018 105 500 U1 und US 7 256 699 B2 bekannt.

Aufgabe der vorliegenden Erfindung ist es daher, ein verbessertes Bauteil in Form einer Membran für ein Membranventil und/oder eine Membranpumpe mit einem elektronischen Informationsträger zur Verfügung zu stellen.

Diese Aufgabe wird durch ein Bauteil in Form einer Membran für ein Membranventil und/oder eine Membranpumpe gemäß Anspruch 1 gelöst. Bevorzugte Ausgestaltungen der vorliegenden Erfindung sind Gegenstand der Unteransprüche.

Die vorliegende Erfindung umfasst ein Bauteil in Form einer Membran für ein Membranventil und/oder eine Membranpumpe mit einem elektronischen Informationsträger. Dabei ist vorgesehen, dass das Bauteil eine Aussparung und einen Stift aufweist, wobei der Informationsträger über die Aussparung und den Stift mit dem Bauteil verbunden ist. Hierdurch wird eine einfache Herstellbarkeit und ein verbessertes Recycling gewährleistet.

Erfindungsgemäß weist das Bauteil damit sowohl eine Aussparung als auch einen Stift auf, wobei der elektronische Informationsträger über Aussparung und Stift mit dem Bauteil verbunden ist.

Gemäß der vorliegenden Erfindung ist der Stift in der Aussparung befestigt. Dabei dient die Aussparung der Befestigung des Stiftes, und der Stift wiederum der Befestigung eines Trägerelementes für den Informationsträger mit dem Bauteil.

Gemäß der Erfindung handelt es sich bei der Aussparung um ein Sackloch. Ein solches kann besonders einfach in ein Bauteil eingebracht werden, und dient dann der Verbindung mit dem Informationsträger mittels eines in das Sackloch eingebrachten Stiftes.

In einer möglichen Ausgestaltung kann es sich bei dem Stift um einen Stehbolzen handeln.

Gemäß der Erfindung ragt der Stift aus der Oberfläche des Bauteils heraus. Hierdurch kann der elektronische Informationsträger an dem aus der Oberfläche des Bauteils herausragenden Teil des Stiftes befestigt werden.

Gemäß der vorliegenden Erfindung umfasst das Bauteil ein Trägerelement, welches mit dem Stift verbunden ist und an und/oder in welchem der Informationsträger angeordnet ist.

Bei dem Trägerelement kann es sich insbesondere um eine Kappe handeln. Die Kappe dient damit als Träger für den elektronischen Informationsträger und ist mit dem Stift verbunden, wobei der Stift in einer Aussparung des Bauteils befestigt ist.

In einer möglichen Ausgestaltung der vorliegenden Erfindung ist das Trägerelement aus Kunststoff und/oder einem Elastomer gefertigt. Alternativ oder zusätzlich kann das Trägerelement aus einem thermoplastischen Kunststoff gefertigt sein.

In einer möglichen Ausgestaltung der vorliegenden Erfindung liegt das Trägerelement in einem Umfangsbereich des Stiftes auf einer Oberfläche des Bauteiles auf. Insbesondere kann das Trägerelement dabei zusammen mit dem Stift eine Pilz-Form aufweisen.

Erfindungsgemäß besteht eine Reihe von Möglichkeiten, wie der Informationsträger mittels der Aussparung, des Stiftes und des Trägerelementes mit dem Bauteil verbunden ist.

In einer ersten Ausgestaltung ist der Informationsträger im Inneren des Trägerelementes angeordnet. Insbesondere kann der Informationsträger vom Material des Trägerelementes umschlossen sein. In einer möglichen Ausgestaltung der vorliegenden Erfindung wird das Trägerelement im Spritzgussverfahren hergestellt, wobei der Informationsträger in die Spritzgussform eingebracht und mit dem Material des Trägerelementes umspritzt wird.

In einer weiteren Ausgestaltung der vorliegenden Erfindung ist der Informationsträger an einer der Oberfläche des Bauteils zugewandten Unterseite des Trägerelementes angeordnet. Beispielsweise kann der Informationsträger mit einer solchen Unterseite des Trägerelementes verklebt werden.

Weitere mögliche Ausgestaltungen des erfindungsgemäßen Bauteils, welche mit allen der oben genannten Optionen anwendbar sind, werden im Folgenden beschrieben:
In einer möglichen Ausgestaltung der vorliegenden Erfindung umgibt der Informationsträger die Aussparung und/oder den Stift ringförmig. Hierdurch kann eine relativ große Grundfläche des Informationsträgers erreicht werden.

In einer möglichen Ausgestaltung der vorliegenden Erfindung steht der Informationsträger mit einem in dem Stift angeordneten Sensor in Verbindung. Insbesondere kann der Stift dabei eine Bohrung aufweisen, in welche ein Sensor eingebracht ist, wobei der Informationsträger mit diesem Sensor in Verbindung steht.

Alternativ oder zusätzlich kann der Informationsträger durch den Stift hindurch mit einem Sensor in Verbindung stehen. Insbesondere kann der Stift dabei eine Bohrung aufweisen, durch welche hindurch eine elektronische Verbindungsleitung führt, welche einen innerhalb des Bauteils angeordneten Sensor mit dem elektronischen Informationsträger verbindet.

Steht der Informationsträger mit einem Sensor in Verbindung, umfasst der Informationsträger bevorzugt eine Auswerte- und/oder Übertragungseinheit, um Signale des Sensors auszuwerten und/oder zu übertragen.

In einer möglichen Ausgestaltung der vorliegenden Erfindung ist eine lösbare Verbindung zwischen dem Informationsträger und dem Bauteil vorgesehen. Dies ermöglicht eine einfache Trennung zwischen Informationsträger und Bauteil für Zwecke des Recyclings.

In einer ersten Variante der vorliegenden Erfindung ist der Stift lösbar mit der Aussparung verbunden. Beispielsweise kann der Stift kraftschlüssig und/oder durch eine Clip-Verbindung in der Aussparung gehalten sein.

Der Stift kann - auch unabhängig von der Verbindung zwischen Stift und Bauteil - einstückig mit dem Trägerelement gefertigt und/oder stoffschlüssig mit dem Trägerelement in Verbindung stehen. Beispielsweise kann das Trägerelement dabei mit dem Stift verklebt sein.

In einer zweiten Variante der vorliegenden Erfindung ist das Trägerelement lösbar mit dem Stift verbunden, beispielsweise kraftschlüssig und/oder durch eine Clip-Verbindung an diesem gehalten.

Der Stift kann - auch unabhängig von der Verbindung zwischen Stift und Trägerelement - einstückig mit dem Bauteil gefertigt oder stoffschlüssig mit dem Bauteil verbunden sein. Beispielsweise kann der Stift in der Aussparung verklebt sein.

In einer möglichen Ausgestaltung der vorliegenden Erfindung ist der Informationsträger drahtlos auslesbar. Insbesondere handelt es sich bei dem Informationsträger um einen RFID-Chip.

In einer möglichen Ausgestaltung der vorliegenden Erfindung umfasst der RFID-Chip ein Speicherelement, in welchem Daten abgespeichert sind, wobei diese Daten drahtlos über den RFID-Chip ausgelesen werden können. Beispielsweise kann es sich bei diesen Daten um Produktdaten des Bauteils handeln.

Alternativ oder zusätzlich kann der RFID-Chip zum Auslesen und/oder zum drahtlosen Übertragen von Sensordaten einsetzbar sein.

Bei dem RFID-Chip kann es sich um einen aktiven oder um einen passiven RFID-Chip handeln.

Durch die vorliegende Erfindung wird der elektronische Informationsträger nicht innerhalb des Bauteils angeordnet, sondern außerhalb des Bauteils positioniert. Hierdurch ergibt sich zum einen eine bessere optische Erkennung der Position des Informationsträgers und zum anderen eine bessere Funkverbindung, da dieser von weniger Metall umschlossen ist.

Das Trägerelement, insbesondere die Kappe, in oder an welchem der elektronische Informationsträger angeordnet ist, kann weiterhin eine von dem übrigen Bauteil unterschiedliche Farbe aufweisen.

Gemäß der vorliegenden Erfindung handelt es sich bei dem erfindungsgemäßen Bauteil um ein flächiges Element.

Bevorzugt handelt es sich auch bei dem elektronischen Informationsträger um ein flächiges Element, wobei die Erstreckungsebene des elektronischen Informationsträgers bevorzugt parallel zur Erstreckungsebene des flächigen Bauteils verläuft.

Gemäß der vorliegenden Erfindung handelt es sich bei dem Bauteil um eine Membran für ein Membranventil und/oder eine Membranpumpe. Insbesondere kann es sich um eine mehrschichtige Membran und/oder um eine Membran mit mindestens einer Schicht aus einem Elastomer handeln. Alternativ oder zusätzlich kann die Membran auch eine oder mehrere Metallschichten umfassen.

In einer möglichen Ausgestaltung der vorliegenden Erfindung weist die Membran ein Funktionsbereich und eine Lasche auf, wobei die Aussparung und/oder der Stift an der Lasche angeordnet ist. Insbesondere kann der Funktionsbereich dabei in einem medienumströmten Bereich angeordnet sein und/oder im Betrieb verformt werden. Die Lasche schaut dagegen bevorzugt aus dem medienumströmten Bereich und/oder einem Gehäuse heraus. Alternativ oder zusätzlich kann die Lasche im Betrieb unverformt bleiben.

Neben dem erfindungsgemäßen Bauteil umfasst die vorliegende Erfindung weiterhin ein Membranventil und/oder eine Membranpumpe mit einem erfindungsgemäßen Bauteil in Form einer Membran, wie es oben beschrieben wurde.

In einer möglichen Ausgestaltung der vorliegenden Erfindung ist die Membran zwischen zwei Gehäuseelementen des Membranventils und/oder der Membranpumpe eingespannt.

In einer möglichen Ausgestaltung der vorliegenden Erfindung ist die Aussparung und/oder der Stift in einem Bereich der Membran vorgesehen, welcher aus einem Gehäuse des Membranventils und/oder der Membranpumpe herausragt.

Die vorliegende Erfindung wird nun anhand von Ausführungsbespielen und Zeichnungen näher beschrieben.

Dabei zeigen:
- Fig. 1:: drei alternative Ausgestaltungen eines erfindungsgemäßen Bauteils mit einem elektronischen Informationsträger in einer Schnittansicht und
- Fig. 2a, 2b: Möglichkeiten der Abdichtung bei einer Ausgstaltung gemäß Fig. 1.

Für eine Membran für ein Membranventil und/oder eine Membranpumpe ist es von Interesse, Informationen zu der Membran elektronisch auslesen zu können. Hierfür kann ein elektronischer Informationsträger mit dem Bauteil verbunden werden, auf welchem diese Informationen abgespeichert sind. Beispielsweise kann es sich dabei um Bauteil-Parameter und/oder Sensordaten handeln.

Insbesondere kann das Auslesen eines solchen elektronischen Informationsträgers zum Condition-Monitoring eingesetzt werden.

Im Folgenden werden nun mehrere Ausführungsbeispiele der vorliegenden Erfindung beschrieben, welche unterschiedliche erfindungsgemäße Möglichkeiten zeigen, wie ein elektronischer Informationsträger mit einem Bauteil in Form einer Membran für ein Membranventil und/oder eine Membranpumpe verbunden werden kann.

Bei dem elektronischen Informationsträger handelt es sich insbesondere um einen drahtlos auslesbaren Informationsträger, insbesondere um einen RFID-Chip. Bei dem Bauteil handelt es sich um eine Membran für eine Mem-branpumpe und/oder ein Membranventil. Die Membran kann mehrschichtig aufgebaut sein. Eine oder mehrere Schichten können aus einem Elastomer und/oder aus einem Metall bestehen.

Die vorliegende Erfindung bietet die Möglichkeit, den elektronischen Informationsträger und insbesondere den RFID-Chip einfacher von dem Bauteil zu trennen, und ermöglicht damit ein verbessertes Recycling. Weiterhin wird die Auslesbarkeit des elektronischen Informationsträgers verbessert, und die Herstellbarkeit vereinfacht.

Gemäß einem ersten Aspekt der vorliegenden Erfindung wird der elektronische Informationsträger nicht innerhalb des Bauteils, und insbesondere nicht innerhalb der Membran angeordnet, sondern außerhalb des eigentlichen Bauteils angeordnet und mittels eines Stiftes mit dem Bauteil verbunden.

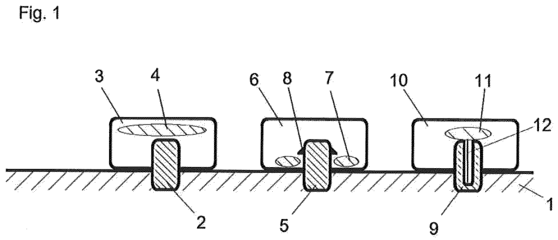

Fig. 1 zeigt drei Möglichkeiten, wie ein elektronischer Informationsträger 4, 7, 11 über einen Stift 2, 5, 9 mit dem Bauteil 1 verbunden werden kann.

Der Stift 2, 5, 9 ragt aus einer Oberfläche des Bauteils heraus. An dem Stift 2, 5, 9 ist ein Trägerelement in Form einer Kappe 3, 6, 10 befestigt, in oder an welcher der Informationsträger angeordnet ist. Die Kappe 3, 6, 10 kann insbesondere aus einem Elastomer gefertigt sein.

Wie bei dem linken und rechten Ausführungsbeispiel in Fig. 1 dargestellt ist, kann der elektronische Informationsträger im Inneren der Kappe angeordnet sein. Beispielsweise kann er im Rahnen der Herstellung der Kappe mit dem Material der Kappe umspritzt werden. Bei der mittleren Ausgestaltung Fig. 1 ist der Informationsträger 7 dagegen auf einer dem Bauteil 1 zugewandten Unterseite der Kappe 6 angeordnet, beispielsweise mit dieser verklebt. Alternativ könnte auch hier der Informationsträger 7 im Inneren der Kappe angeordnet sein.

Bei dem linken in Fig. 1 dargestellten Ausführungsbeispiel ist der elektronische Informationsträger als flächiges Element ausgeführt, welches oberhalb des Stiftes 2 in der Kappe 3 angeordnet ist.

Bei der mittleren Ausgestaltung in Fig. 1 ist der elektronische Informationsträger dagegen ringförmig ausgestaltet, und umgibt den Stift 5.

Bei der in Fig. 1 rechts dargestellten Ausgestaltung weist der Stift 9 eine Bohrung auf, in welcher ein Sensor 12 angeordnet ist. Der elektronischen Informationsträger 11 weist Anschlüsse auf, mit welchem er mit dem Sensor 12 in Verbindung steht.

Alternativ oder zusätzlich könnte eine Verbindungsleitung durch den Stift 9 hindurchgehen, um den elektronischen Informationsträger mit einem innerhalb des Bauteils 1 angeordneten Sensor zu verbinden.

Bei einer Ausgestaltung mit einem Sensor ist der elektronische Informationsträger bevorzugt so ausgestaltet, das er Sensorsignale auswertet und/oder drahtlos überträgt, sodass der Sensor mittels des elektronischen Informationsträgers ausgelesen werden kann.

In allen drei in Fig. 1 dargestellten Ausführungsformen liegt die Kappe 3, 6, 10 mit ihrer Unterseite in einem Umfangsbereich des Stiftes 2, 5, 9 auf einer Oberfläche des Bauteils 1 auf. Weiterhin kann die Kappe in diesem Umfangsbereich mit der Oberfläche verklebt sein.

In einer dargestellten Ausgestaltung dient der Stift der Verbindung zwischen dem Bauteil und der Kappe, welche den elektronischen Informationsträger trägt. Die Kappe kann dabei, wie links in Fig. 1 dargestellt, auf den Stift aufgepresst werden. Alternativ oder zusätzlich kann die Kappe mit dem Stift und/oder der Oberfläche des Bauteils verklebt werden.

Bei dem in Fig. 1 in der Mitte dargestellten Ausführungsbeispiel weist der Stift 8 Rastnasen auf, welche mit entsprechenden Aussparungen der Kappe 6 eine Clip-Verbindung bilden. Alternativ oder zusätzlich wäre eine Verschraubung der Kappe auf dem Stift denkbar.

In einer möglichen, nicht dargestellten Ausführungsform ist der Stift 2, 5, 9 einstückig mit dem Bauteil gefertigt.

In einer möglichen Ausgestaltung kann es sich um einen erhabenen Stift handeln, welcher maschinell bearbeitet wird.

Bei den in Fig. 1 dargestellten Ausgestaltungen wird der Stift dagegen in einer Aussparung des Bauteils gehalten. Insbesondere kann es sich bei dieser Aussparung um ein Sackloch handeln, welches in eine Oberfläche des Bauteils eingebracht ist. Die Aussparung bzw. das Sackloch stehen dabei bevorzugt senkrecht auf einer Ebene des Bauteils, insbesondere senkrecht auf der Membranebene und/oder der Oberfläche des Bauteils.

Der Stift kann beispielsweise in die Aussparung bzw. das Sackloch eingeschlagen werden. Alternativ oder zusätzlich kann der Stift in der Aussparung bzw. dem Sackloch verklebt werden.

Wird eine Verklebung eingesetzt, wir bevorzugt ein FDA-konformer Kleber eingesetzt. Alternativ oder zusätzlich kann ein in der Pharmaindustrie akzeptierter Klebstoff oder eine entsprechende Vergussmasse eingesetzt werden.

Bei dem Bauteil handelt es sich wie bereits beschrieben um die Membran eines Membranventils und/oder einer Membranpumpe. Insbesondere kann diese mit ihrem Funktionsbereich in einem medienumströmten Bereich angeordnet sein. Jedoch sind auch beliebige andere Anwendungen denkbar.

In einer ersten Ausgestaltung kann der erfindungsgemäße elektronische Informationsträger im Inneren eines Antriebs und/oder Gehäuses angeordnet werden. Eine solche Vorgehensweise ist beim Einsatz bei einem Membranventil dagegen nicht immer möglich, da der Innenbereich medienberührt ist.

Das Bauteil kann daher einen Funktionsbereich und eine Lasche aufweisen, wobei der Funktionsbereich innerhalb eines Gehäuses angeordnet und bevorzugt medienberührt ist, während die Lasche aus dem Gehäuse herausschaut. Der elektronische Informationsträger ist bevorzugt an der Lasche angeordnet. Insbesondere kann die Aussparung und/oder der Stift an der Lasche des Bauteils angeordnet sein.

Die vorliegende Erfindung bietet damit erhebliche Vorteile sowohl bei der Herstellung als auch im Hinblick auf den Umweltschutz. So kann die Elektronik im Rahmen des Recyclings relativ einfach von den Bauteilen getrennt werden. Gegebenenfalls ergibt sich auch eine wiederverwendbare Elektronik.

Bevorzugt stellt die Verbindung zwischen dem elektronischen Informationsträger und dem Bauteil dabei eine Einmal-Verbindung dar. Insbesondere kann die Verbindung so ausgestaltet sein, dass nach einer Trennung des elektronischen Informationsträgers von dem Bauteil keine Möglichkeit besteht, diese wieder miteinander in gleicher Weise zu verbinden, ohne dass dies optisch und/oder elektronisch bemerkbar wäre.

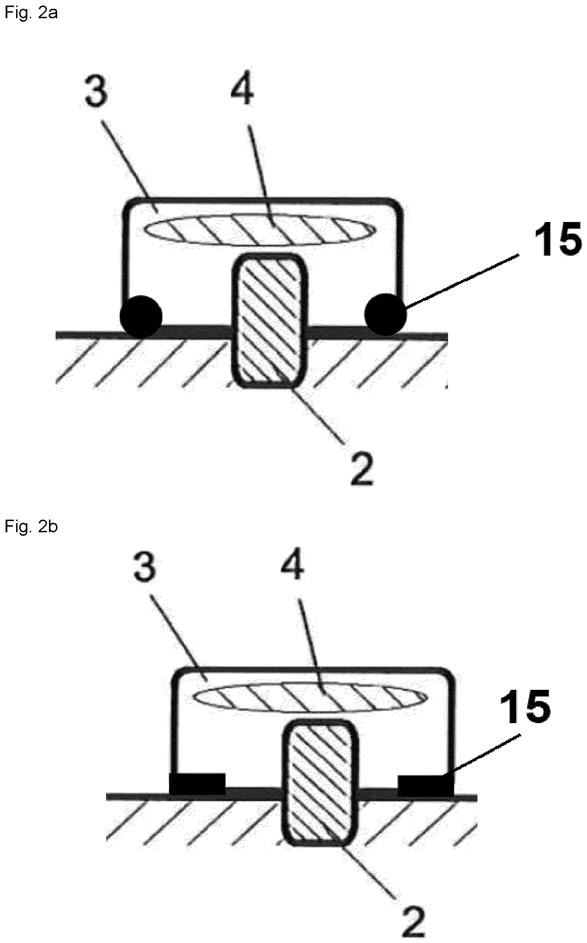

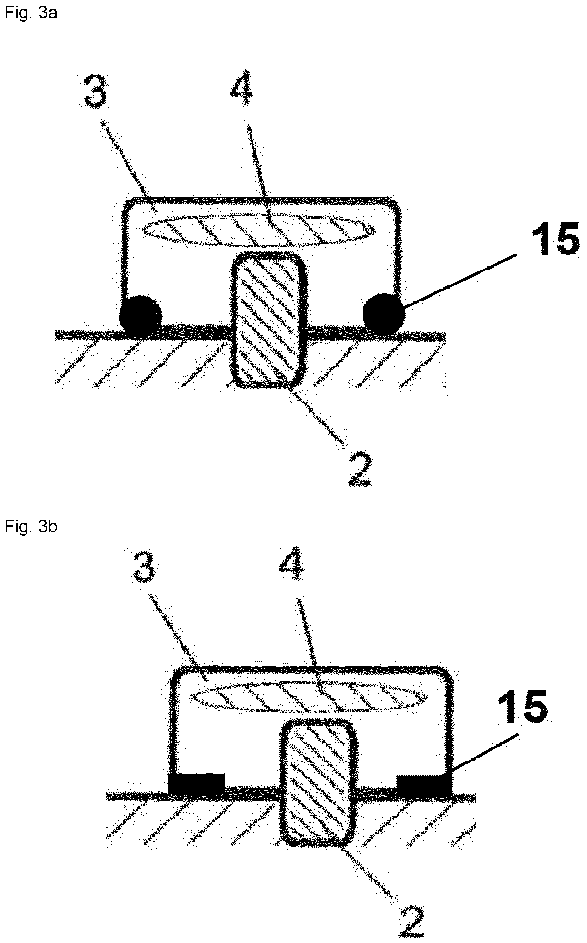

Die Fig. 2a und 2b zeigen beispielhaft die Ausgestaltungen der Fig. 1, wobei eine Dichtung 15 die Kappe (3, 6, 10) gegen die Oberfläche des Bauteils 1 abdichtet. Die Dichtung kann dabei als O-Ring oder Flachdichtung ausgeführt sein.

In einer Ausgestaltung werden Dichtung 15 und/oder der Stift 2, 5, 9 in ihrer Funktion zerstört, sobald die Kappe 3, 6, 10 gelöst wird. Dabei kann der Informationsträger 4, 7, 11 ebenfalls zerstört werden. Dies garantiert die einmalige Verbindung in dieser Konfiguration. Ein neuer Einsatz benötigt also einen neuen oder zumindest einen erneut aktivierten Informationsträger in einer neuen Kappe, die zumindest mit einer neuen Dichtung ausgestattet sein muss. Damit ist die volle Fuktion wieder hergestellt.

## Patentansprüche

1. Bauteil (1) mit einem elektronischen Informationsträger (4), wobei es sich bei dem Bauteil um eine Membran für ein Membranventil und/oder eine Membranpumpe handelt, wobei das Bauteil (1) eine Aussparung und einen Stift (2, 5, 9) aufweist, wobei der Informationsträger (4) über die Aussparung und/oder den Stift (2, 5, 9) mit dem Bauteil (1) verbunden ist, wobei der Stift (2, 5, 9) in der Aussparung befestigt ist, wobei es sich bei der Aussparung um ein Sackloch handelt,
**dadurch gekennzeichnet,**
**dass** der Stift (2, 5, 9) aus einer Oberfläche des Bauteils (1) herausragt und ein Trägerelement (3, 6, 10), insbesondere eine Kappe, mit dem Stift (2, 5, 9) verbunden ist, wobei an und/oder in dem Trägerelement (3, 6, 10) der Informationsträger (4) angeordnet ist.

2. Bauteil nach Anspruch 1, wobei das Trägerelement bevorzugt aus einem Elastomer gefertigt ist.

3. Bauteil nach Anspruch 1 oder 2, wobei das Trägerelement (3, 6, 10) in einem Umfangsbereich (15) des Stiftes (2, 5, 9) auf einer Oberfläche des Bauteils aufliegt.

4. Bauteil nach Anspruch 1, 2 oder 3, wobei der Informationsträger (4) im Inneren des Trägerelementes (3, 10) angeordnet ist und bevorzugt von dem Material des Trägerelementes (3, 10) umschlossen ist.

5. Bauteil nach Anspruch 1, 2 oder 3, wobei der Informationsträger (4) an einer der Oberfläche des Bauteils (1) zugewandten Unterseite des Trägerelementes (6) angeordnet ist.

6. Bauteil nach einem der vorangegangenen Ansprüche, wobei der Informationsträger (4) die Aussparung und/oder den Stift (2, 5, 9) ringförmig umgibt.

7. Bauteil nach einem der vorangegangenen Ansprüche, wobei der Informationsträger (4) mit einem in dem Stift (9) angeordneten Sensor und/oder durch den Stift (9) hindurch mit einem Sensor in Verbindung steht.

8. Bauteil nach einem der vorangegangenen Ansprüche, wobei der Stift (2, 5, 9) lösbar mit der Aussparung verbunden, insbesondere kraftschlüssig und/oder durch eine Clip-Verbindung in dieser gehalten ist, wobei der Stift (2, 5, 9) bevorzugt einstückig mit der Kappe (3, 6, 10) gefertigt und/oder stoffschlüssig mit der Kappe (3, 6, 10) in Verbindung steht.

9. Bauteil nach einem der Ansprüche 1 bis 8, wobei der Stift (2, 5, 9) einstückig mit dem Bauteil (1) gefertigt oder stoffschlüssig mit dem Bauteil (1) verbunden ist, wobei bevorzugt die Kappe (3, 6, 10) lösbar mit dem Stift (2, 5, 9) verbunden ist, insbesondere kraftschlüssig und/oder durch eine Clip-Verbindung an diesem gehalten ist.

10. Bauteil nach einem der vorangegangenen Ansprüche, wobei es sich bei dem Informationsträger (4) um einen RFID-Chip handelt.

11. Bauteil nach einem der vorangegangenen Ansprüche, wobei es sich bei dem Bauteil (1) um eine mehrschichtige Membran und/oder eine Membran mit mindestens einer Schicht aus einem Elastomer handelt.

12. Bauteil nach Anspruch 11, wobei die Membran einen Funktionsbereich und eine Lasche aufweist, wobei die Aussparung und/oder der Stift an der Lasche angeordnet ist.

13. Membranventil und/oder Membranpumpe mit einem Bauteil (1) nach einem der vorangegangenen Ansprüche, insbesondere mit einer Membran nach einem der Ansprüche 11 oder 12, wobei die Membran bevorzugt zwischen zwei Gehäuseelementen eingespannt ist und/oder wobei die Aussparung und/oder der Stift (2, 5, 9) an einem Bereich der Membran vorgesehen ist, welcher aus einem Gehäuse des Membranventils und/oder der Membranpumpe herausragt.

## Claims

1. Component (1) having an electronic information carrier (4), wherein the component is a diaphragm for a diaphragm valve and/or a diaphragm pump, wherein the component (1) has a cutout and a pin (2, 5, 9), wherein the information carrier (4) is connected to the component (1) via the cutout and/or the pin (2, 5, 9), wherein the pin (2, 5, 9) is secured in the cutout, wherein the cutout is a blind hole,
**characterized**
**in that** the pin (2, 5, 9) protrudes out of a surface of the component (1) and a carrier element (3, 6, 10), in particular a cap, is connected to the pin (2, 5, 9), wherein the information carrier (4) is arranged on and/or in the carrier element (3, 6, 10).

2. Component according to Claim 1, wherein the carrier element is preferably manufactured from an elastomer.

3. Component according to Claim 1 or 2, wherein the carrier element (3, 6, 10) rests on a surface of the component in a circumferential region (15) of the pin (2, 5, 9).

4. Component according to Claim 1, 2 or 3, wherein the information carrier (4) is arranged in the interior of the carrier element (3, 10) and is preferably surrounded by the material of the carrier element (3, 10).

5. Component according to Claim 1, 2 or 3, wherein the information carrier (4) is arranged on a bottom side of the carrier element (6), the bottom side facing the surface of the component (1).

6. Component according to any of the preceding claims, wherein the information carrier (4) annularly surrounds the cutout and/or the pin (2, 5, 9).

7. Component according to any of the preceding claims, wherein the information carrier (4) is connected to a sensor arranged in the pin (9) and/or to a sensor through the pin (9).

8. Component according to any of the preceding claims, wherein the pin (2, 5, 9) is detachably connected to the cutout, in particular is held non-positively and/or by a clip connection in the cutout, wherein the pin (2, 5, 9) is preferably manufactured in one piece with the cap (3, 6, 10) and/or is cohesively connected to the cap (3, 6, 10) .

9. Component according to any of Claims 1 to 8, wherein the pin (2, 5, 9) is manufactured in one piece with the component (1) or is cohesively connected to the component (1), wherein the cap (3, 6, 10) is preferably detachably connected to the pin (2, 5, 9), in particular is held non-positively and/or by a clip connection on the pin.

10. Component according to any of the preceding claims, wherein the information carrier (4) is an RFID chip.

11. Component according to any of the preceding claims, wherein the component (1) is a multilayer diaphragm and/or a diaphragm with at least one layer composed of an elastomer.

12. Component according to Claim 11, wherein the diaphragm has a functional region and a tab, wherein the cutout and/or the pin is arranged on the tab.

13. Diaphragm valve and/or diaphragm pump comprising a component (1) according to any of the preceding claims, in particular comprising a diaphragm according to either of Claims 11 and 12, wherein the diaphragm is preferably clamped between two casing elements and/or wherein the cutout and/or the pin (2, 5, 9) are/is provided on a region of the diaphragm that protrudes out of a casing of the diaphragm valve and/or the diaphragm pump.

## Revendications

1. Composant (1) comprenant un support d'informations électronique (4), le composant étant un diaphragme destiné à une vanne à diaphragme et/ou une pompe à diaphragme, le composant (1) comportant un évidement et une tige (2, 5, 9), le support d'informations (4) étant relié au composant (1) par le biais de l'évidement et/ou de la tige (2, 5, 9), la tige (2, 5, 9) étant fixée dans l'évidement, l'évidement étant un trou borgne,
**caractérisé en ce que**
la tige (2, 5, 9) fait saillie d'une surface du composant (1) et un élément de support (3, 6, 10), en particulier un capuchon, est relié à la tige (2, 5, 9), le support d'informations (4) étant disposé sur et/ou dans l'élément de support (3, 6, 10).

2. Composant selon la revendication 1, l'élément de support étant de préférence en un élastomère.

3. Composant selon la revendication 1 ou 2, l'élément de support (3, 6, 10) venant en appui sur une surface du composant dans une zone périphérique (15) de la tige (2, 5, 9) .

4. Composant selon la revendication 1, 2 ou 3, le support d'informations (4) étant disposé à l'intérieur de l'élément de support (3, 10) et étant de préférence entouré par la matière de l'élément de support (3, 10).

5. Composant selon la revendication 1, 2 ou 3, le support d'informations (4) étant disposé sur une face inférieure de l'élément de support (6), laquelle est dirigée vers la surface du composant (1).

6. Composant selon l'une des revendications précédentes, le support d'informations (4) entourant annulairement l'évidement et/ou la tige (2, 5, 9).

7. Composant selon l'une des revendications précédentes, le support d'informations (4) étant relié à un capteur disposé dans la tige (9) et/ou à un capteur à travers la tige (9).

8. Composant selon l'une des revendications précédentes, la tige (2, 5, 9) étant reliée de manière amovible à l'évidement, en particulier étant maintenue dans celui-ci par une liaison en force et/ou par une liaison par clip, la tige (2, 5, 9) étant de préférence fabriquée d'une seule pièce avec le capuchon (3, 6, 10) et/ou étant reliée au capuchon (3, 6, 10) par une liaison de matière.

9. Composant selon l'une des revendications 1 à 8, la tige (2, 5, 9) étant fabriquée d'une seule pièce avec le composant (1) ou étant reliée au composant (1) par une liaison de matière, le capuchon (3, 6, 10) étant de préférence relié de manière amovible à la tige (2, 5, 9), en particulier étant maintenu sur celle-ci par une liaison en force et/ou par une liaison par clip.

10. Composant selon l'une des revendications précédentes, le support d'informations (4) étant une puce RFID.

11. Composant selon l'une des revendications précédentes, le composant (1) étant un diaphragme multicouche et/ou un diaphragme comprenant au moins une couche en élastomère.

12. Composant selon la revendication 11, le diaphragme comportant une zone fonctionnelle et une languette, l'évidement et/ou la tige étant disposés sur la languette.

13. Vanne à diaphragme et/ou pompe à diaphragme comprenant un composant (1) selon l'une des revendications précédentes, en particulier un diaphragme selon l'une des revendications 11 ou 12, le diaphragme étant de préférence serré entre deux éléments de boîtier et/ou l'évidement et/ou la tige (2, 5, 9) étant prévus sur une zone du diaphragme qui fait saillie d'un boîtier de la vanne à diaphragme et/ou de la pompe à diaphragme.
